# EUROPÄISCHE PATENTSCHRIFT

(11) **EP 3 670 117 B1**
(45) Veröffentlichungstag und Bekanntmachung des Hinweises auf die Patenterteilung: **02.08.2023**
(21) Anmeldenummer: 19211645.7
(22) Anmeldetag: 26.11.2019
(51) Int. Cl.: B25J 19/00, B25J 11/00, B05B 13/04, B05B 12/14, B05B 9/03

(54) **KANALSTRUKTUR FÜR EINEN APPLIKATIONSROBOTER UND APPLIKATIONSROBOTER**
CHANNEL STRUCTURE FOR AN APPLICATION ROBOT AND APPLICATION ROBOT
STRUCTURE DES CANAUX POUR UN ROBOT D'APPLICATION ET UN ROBOT D'APPLICATION

(30) Priorität: 21.12.2018 DE 102018133412
(43) Veröffentlichungstag der Anmeldung: 24.06.2020
(73) Patentinhaber: b+m surface systems GmbH, 36132 Eiterfeld (DE)
(72) Erfinder: Schwab, Stephan, 71111 Waldenbuch (DE); Kübler, Patrick, 72202 Nagold (DE)
(74) Vertreter: Ostertag & Partner Patentanwälte mbB

(56) Entgegenhaltungen:
- DE-T2- 69 929 081
- DE-T2-602005 003 408
- JP-A- 2007 190 629
- JP-B2- 3 830 488

## Beschreibung

Die Erfindung betrifft eine Kanalstruktur zur Verwendung in einem Roboter zur Beschichtung von Gegenständen, welcher ein Roboterteil mit einem Betriebsraum aufweist, durch welchen Fluidleitungen geführt sind, mit denen verschiedene Medien zu einer von dem Roboter getragenen Applikationseinrichtung geführt werden.

Außerdem betrifft die Erfindung einen Roboter zur Beschichtung von Gegenständen, welcher ein Roboterteil mit einem Betriebsraum aufweist, durch welchen Fluidleitungen geführt sind, mit denen verschiedene Medien zu einer von dem Roboter getragenen Applikationseinrichtung geführt werden.

Derartige Roboter werden insbesondere in Lackieranlagen zum Lackieren von Fahrzeugkarosserien, aber auch zum sonstigen Beschichten auch anderer Gegenstände, eingesetzt. Der meist mehrachsige Roboter führt die Applikationseinrichtung, insbesondere eine Spritzpistole oder einen Hochrotationszerstäuber, und kann aufgrund seiner Mehrachsigkeit der Kontur des zu beschichtenden Gegenstandes genau folgen.

Üblicherweise sind in der Nähe der Applikationseinrichtung an oder in einem Armabschnitt des mehrachsigen Roboters Betriebseinheiten angebracht, welche zum Betrieb der Applikationseinrichtung erforderlich sind. Zu solchen Betriebsmitteln zählen unter anderem unabhängig von dem Arbeitsprinzip der Applikationseinrichtung Lackförderpumpen, Druckluftsteuerungen, Reservoirs für Reinigungsmittel und dergleichen.

Häufig arbeitet die Applikationseinrichtung nach dem elektrostatischen Prinzip. In diesem Fall wird das Beschichtungsmaterial mittels einer Hochspannungselektrode ionisiert und aufgrund elektrostatischer Kräfte auf den zu beschichtenden Gegenstand aufgebracht. Dieser ist hierfür geerdet oder zumindest auf annähernd Massepotential gehalten. Zu den Betriebseinheiten gehören in diesem Fall auch die elektronischen Bauteile und Komponenten, die für das elektrostatische Arbeitsprinzip erforderlich sind.

Die Applikationseinrichtung wird über Fluidleitungen mit erforderlichen Medien versorgt, die meist als Leitungsbündel mehr oder weniger lose verlegt sind. Wie weiter untern nochmals erläutert wird, teilen sich Fluidleitungen und Betriebseinheiten oder weitere Komponenten des Roboters den Betriebsbereich. Insgesamt kann es durch die Bewegungen des Roboters zu mechanischen Belastungen der Fluidleitungen kommen, welche zu einer Leckage führen kann. Ein Austausch einer defekten Fluidleitung ist auf Grund der beengten räumlichen Verhältnisse am bzw. im Roboter und durch die neben den Fluidleitungen verbauten Komponenten erschwert.

Die Dokumente DE 60 2005 003408 T2, JP 2007 190629 A und JP 3 830488 B2 repräsentieren den Stand der Technik.

Es ist Aufgabe der Erfindung, eine Lösung für diese Schwierigkeiten bereitzustellen.

Diese Aufgabe wird durch eine Kanalstruktur nach Anspruch 1 gelöst, welche
a) als gesondertes Bauteil ausgebildet ist;
   und
b) eine Führungsstruktur für mehrere Fluidleitungen umfasst; und/oder
c) eine Leitungsstruktur für in ein oder mehreren Fluidleitungen geführte Medien umfasst.

Die Führungsstruktur stellt für mehrere Fluidleitungen eine bezogen auf das Roboterteil bewegungsgesicherte Führung bereit, so dass dort eine Eigenbewegung der Fluidleitungen relativ zu dem Roboterteil weitgehend unterbunden werden kann.

Die Leitungsstruktur stellt für ein Medium in einer Fluidleitung einen bezogen auf das Roboterteil bewegungsgesicherten Strömungsweg bereit.

Insgesamt werden dadurch die bewegungsinduzierten mechanischen Belastungen für die Fluidleitungen reduziert.

Es ist vorgesehen, dass
a) die Führungsstruktur wenigstens eine Kanalleitung mit einem Eingangsende und einem Ausgangsende umfasst, welche einen Durchgangskanal definiert und als Führungs-Kanalleitung dient, derart, dass eine Fluidleitung durch den Durchgangskanal hindurchführbar ist; und von Vorteil, wenn
b) die Leitungsstruktur wenigstens eine Kanalleitungen mit einem Eingangsende und einem Ausgangsende umfasst, welche einen Durchgangskanal definiert und als Strömungs-Kanalleitung der Leitungsstruktur dient, derart, dass ein Medium durch den Durchgangskanal strömen kann.

Entweder werden also vorhandene Fluidleitungen gleichsam durch eine Kanalleitung gefädelt oder eine Kanalleitung selbst dient als Strömungsweg für ein Medium.

In letzterem Fall ist es günstig, wenn das Eingangsende und das Ausgangsende der Strömungs-Kanalleitung jeweils als Anschluss für einen Fluidleitungs-Zuführabschnitt und einen Fluidleitungs-Abführabschnitt einer Fluidleitung ausgebildet ist, so dass die Strömungs-Kanalleitung als Strömungsabschnitt in die Fluidleitung integriert werden kann.

Eine vorteilhafte Varianz in der Leitungsführung wird erzielt, wenn eine oder mehrere Kanalleitungen der Führungsstruktur und/oder der Leitungsstruktur einen gekrümmten Verlauf haben und/oder eine Kanalgabelung aufweisen und/oder in Verlaufsrichtung einen sich ändernden Querschnitt und/oder eine sich ändernde Wandstärke haben und/oder dass mehrere Kanalleitungen der Führungsstruktur und/oder der Leitungsstruktur in Verlaufrichtung voneinander abweichende Querschnitte und/oder Wandstärken haben.

Für die Montage im Betriebsraum ist es außerdem günstig, wenn wenigstens eine Halteeinrichtung für eine Betriebseinheit, insbesondere für eine Dosiereinheit oder für eine Medienwechseleinheit, und/oder für eine Funktionseinheit vorgesehen ist, insbesondere für einen Temperatursensor zur Überwachung der Temperatur eines Mediums, für eine Temperiereinrichtung zum Temperieren eines Mediums, für einen Drucksensor zum Überprüfen des Druckes eines Mediums, für einen Datenspeicher, für einen Energiespeicher, für einen Energieüberträger, für einen Datensender oder einen Datenempfänger.

Für eine stabile Ausbildung der Kanalstruktur ist vorzugsweise eine Tragstruktur mit einer Rahmenkonstruktion vorgesehen, welche tragend mit den Kanalleitungen verbunden ist.

Die Rahmenkonstruktion umfasst bevorzugt eine Querwange an dem Eingangsende und/oder eine Querwange an dem Ausgangsende der vorhandenen Kanalleitungen umfasst, welche quer zu diesen Kanalleitungen verläuft.

Zu Stabilität trägt außerdem bei, wenn jeweils eine Querwange am Eingangsende und am Ausgangsende mittels Längsprofilen miteinander verbunden sind. Vorzugsweise ist ferner ein Querprofil vorhanden, welches zumindest an einem Ende mit einem Längsprofil verbunden ist.

Zudem ist es günstig, wenn die Tragstruktur ein oder mehrere Verstärkungselemente umfasst, wenn die Rahmenkonstruktion als solche nicht ausreichend starr ist.

Die Verstärkungselemente sind bevorzugt als Längsrippen und/oder Kreuzstreben und/oder Querstreben ausgebildet.

Um möglichst materialsparend zu arbeiten umfassen die Rahmenkonstruktion und/oder Verstärkungselemente Materialausnehmungen bzw. materialfreie Bereiche.

Es ist besonders günstig, wenn die Kanalstruktur zumindest teilweise durch ein additives Fertigungsverfahren aus Metall, Kunststoff und/oder Verbundmaterialen hergestellt ist.

Besonders günstig ist es dabei, wenn eine oder mehrere Funktionseinheiten bei dem additiven Fertigungsverfahren als additiver Teilvorgang hergestellt und dabei in die Kanalstruktur integriert sind.

Von besonderem Vorteil ist es, wenn die Tragstruktur oder die Kanalstruktur ein einstückiges integratives Bauteil ist.

Die oben genannte Aufgabe wird bei einem Roboter zur Beschichtung von Gegenständen der eingangs genannten Art dadurch gelöst, dass eine Kanalstruktur mit einigen oder allen der oben zur Kanalstruktur erläuterten Merkmale vorgesehen ist.

Die Kanalstruktur kann vorteilhaft in oder an einem Armteil eines Roboterarmes vorgesehen sein.

Besonders in der Nähe der Applikationseinrichtung kommen die oben erläuterten Schwierigkeiten zu tragen. Daher ist es günstig, wenn das Armteil dasjenige Armteil des Roboters ist, das mit einem Handstück des Roboterarmes verbunden ist, welches seinerseits die Applikationseinrichtung trägt.

Bevorzugt ist der Betriebsraum ein Innenraum ist, der durch eine Abdeckung verschließbar ist.

Dabei kann die Abdeckung durch die Kanalstruktur ausgebildet sein.

Nachstehend werden Ausführungsbeispiele der Erfindung anhand der Zeichnungen näher erläutert. In diesen zeigen:
- Figur 1: einen Armabschnitt eines mehrachsigen Roboters nach dem Stand der Technik, der eine Applikationseinrichtung trägt, wobei in einem von außen durch einen Zugang erreichbaren Innenraum eines Armteils des Roboters Fluidleitungen und Betriebseinheiten zur Versorgung der Applikationseinrichtung mit Medien untergebracht sind;
- Figur 2: eine Draufsicht auf den Armabschnitt mit Blick auf die Abdeckung;
- Figur 3: eine der Figur 1 entsprechende Ansicht des Armabschnitts mit einer erfindungsgemäßen Kanalstruktur im Innenraum, die einer Führungsstruktur für eine oder mehrere Fluidleitungen und/oder eine Leitungsstruktur für Medien umfasst; wobei sich im Innenraum auch die Betriebseinheiten befinden;
- Figur 4: eine der Figur 3 entsprechende Ansicht des Armabschnitts, wobei die Betriebseinheiten entfernt sind;
- Figuren 5 bis 8: verschiedene Ausführungsbeispiele der Kanalstruktur;
- Figur 9: einen Armabschnitt einer Abwandlung eines Roboters, bei welchem die Abdeckung des Innenraums die Kanalstruktur bereitstellt;
- Figur 10: eine perspektivische Querschnittansicht des Armteiles mit dem Zugang zum Innenraum.

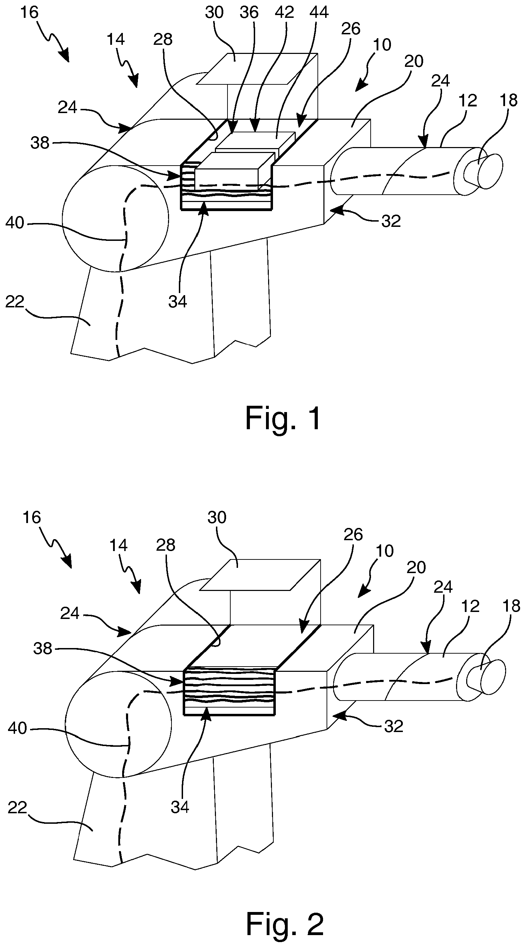

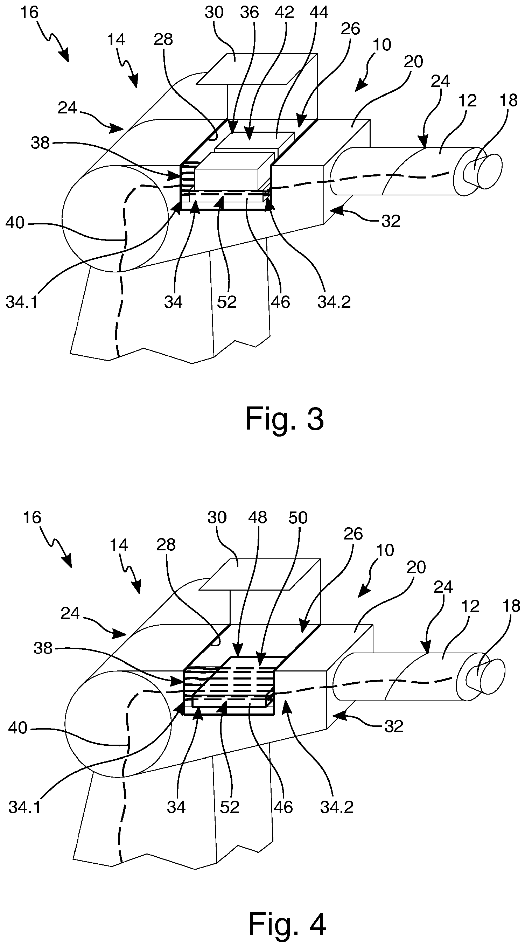

Die Figuren 1 bis 4 zeigen einen Armabschnitt 10 mit einem endständigen Handstück 12 eines beweglichen Roboterarms 14, der Teil eines hier nicht weiter interessierenden mehrachsigen Applikationsroboters 16 ist, wie er bei Lackieranlagen häufig verwendet wird, wobei die Figuren 1 und 2 einen Aufbau eines Roboterarms 14 illustriert, wie er bei am Markt bekannten Robotern 16 vorgesehen ist.

Der Applikationsroboter 16 trägt eine Applikationseinrichtung 18. Diese ist in an und für sich bekannter Weise von dem Handstück 12 getragen und arbeitet beim vorliegenden Ausführungsbeispiel nach dem Prinzip der elektrostatischen Beschichtung. Hierfür ist die Applikationseinrichtung 18 mit einem hier nicht eigens gezeigten Hochspannungsgenerator verbunden, wie es an und für sich bekannt ist. Die Applikationseinrichtung 18 ist beim vorliegenden Ausführungsbeispiel ein Hochrotationszerstäuber.

Von dem Armabschnitt 10 des Roboters sind ein vorderes Armteil 20, das beweglich mit dem Handstück 12 verbunden ist, und ein hinteres Armteil 22 gezeigt. Das hintere Armteil 22 ist seinerseits beweglich mit dem vorderen Armteil 20 verbunden. Zur beweglichen Verbindung des Handstücks 12 und der Armteile 20, 22 miteinander sind jeweils mit 24 bezeichnete Gelenk-/Getriebeeinheiten 24 vorhanden, wie sie an und für sich bekannt sind.

Das vordere Armteil 20 begrenzt einen Betriebsraum 26 in Form eines Innenraumes 26, welcher in den Figuren 1 bis 4 und 10 zu erkennen ist und welcher über einen Zugang 28 von außen erreichbar ist. Der Betriebsraum 26 kann auch ein offener Bereich ohne gesonderte Einhausung sein.

Im Betrieb des Roboters 16 ist der Zugang 28 durch eine Abdeckung 30 verschlossen, die in den Figuren 1 bis 4 als Klappmechanismus veranschaulicht ist. Das vordere Armteil 20 dient als Beispiel allgemein eines Roboterteiles 32, welches einen Innenraum 26 bereitstellt, welcher den nachfolgenden Erläuterungen entspricht. Ein entsprechender Innenraum 26 kann auch in anderen Bereichen und anderen Teilen des Roboters 16 vorhanden sein.

In dem Innenraum 26 des Armteils 20 sind eine Vielzahl von medienführenden Fluidleitungen 34 sowie Betriebseinheiten 36 zur Versorgung der Applikationseinrichtung 18 untergebracht. Mit Hilfe der Fluidleitungen 34 werden verschiedene Medien, die insgesamt mit 38 bezeichnet sind, wie zum Beispiel Beschichtungsmaterialien, insbesondere Lacke, Lösemittel und Druckluft zur Applikationseinrichtung 18 geführt. Ein Weg durch den Roboter 16 hindurch ist durch eine gestrichelte Linie 40 veranschaulicht und soll verdeutlichen, dass Fluidleitungen 34 auch in anderen Bereichen durch den Roboter 16 bzw. den Roboterarm 14 hindurch verlegt sind. Alternativ können die Fluidleitungen 34 auch teilweise außen am Roboter 16 entlang geführt sein.

Die oben genannten Medien 38 werden durch die Betriebseinheiten 36, die mit den Fluidleitungen 34 verbunden sind, an die Applikationseinrichtung 18 abgegeben. Solche Betriebseinheiten 36 können beispielsweise Dosiereinheiten 42, insbesondere in Form von Kolbendosierern 44 sein. Zu Betriebseinheiten 36 zählen zum Beispiel auch Medienwechseleinheiten.

Außerdem befinden sich in dem Innenraum 26 des vorderen Armteils 20 noch Bauteile und Komponenten, die nicht eigens gezeigt sind und zum Betrieb und Bewegen des Roboters 16 bzw. des Roboterarms 14 notwendig sind. Hierbei kann es sich, wie eingangs angesprochen, beispielsweise um elektronische Bauteile, Motoren, Kabelleitungen und dergleichen handeln.

Die Fluidleitungen 34 verlaufen bei bekannten Robotern 16, wie die Figuren 1 und 2 veranschaulichen, mehr oder weniger lose als Leitungsbündel durch den Innenraum 26 des Armteils 20. Bei den Bewegungen, die der Roboterarm 14 bei den Beschichtungsvorgängen durchführt, bewegen sich auch die Fluidleitungen 34 in dem Innenraum 26 und werden auf diese Weise nicht unbeträchtlich mechanisch beansprucht. Darüber hinaus können die Fluidleitungen 34 die weiteren Bauteilen und Komponenten, insbesondere die Betriebseinheiten 36, die in dem Innenraum 26 angeordnet sind, berühren, so dass die Fluidleitungen 34 bei Bewegungen des Roboters 16 an diesen Bauteilen entlang reiben, wodurch die mechanische Belastung der Fluidleitungen 34 in diesem Bereich noch weiter erhöht wird.

Hierdurch kann es zu Leckagen an einer Fluidleitungen 34 in dem Innenraum 26 kommen. Um in diesem Fall eine betroffene Fluidleitung 34 auszutauschen, müssen zunächst die Betriebseinheiten 36 ausgebaut werden, um einen Zugang zu den Fluidleitungen 32 zu ermöglichen. Darüber hinaus ist es verhältnismäßig aufwendig, die defekte Fluidleitung 36 aus dem Roboter 16 und dessen Roboterarm 14 heraus- und eine neue Fluidleitung 36 in und durch den Roboter 16 bzw. dessen Roboterarm 14 hineinzuführen. Die defekte und die neue Fluidleitung 36 müssen insbesondere in dem verhältnismäßig engen und räumlich begrenzten Innenraum 26 unter Berücksichtigung der Lage vorhanden Fluidleitungen 34 sorgsam durch das vorhandene Leitungsbündel geführt werden.

Damit diese Schwierigkeiten im Innenraum 26 gemindert werden, ist eine als gesondertes Bauteil ausgebildete Kanalstruktur 46 vorgesehen. Die Kanalstruktur 46 umfasst eine Führungsstruktur 48 für eine oder mehrere Fluidleitungen 34 und/oder eine Leitungsstruktur 50 für in ein oder mehreren Fluidleitungen 34 geführte Medien 38.

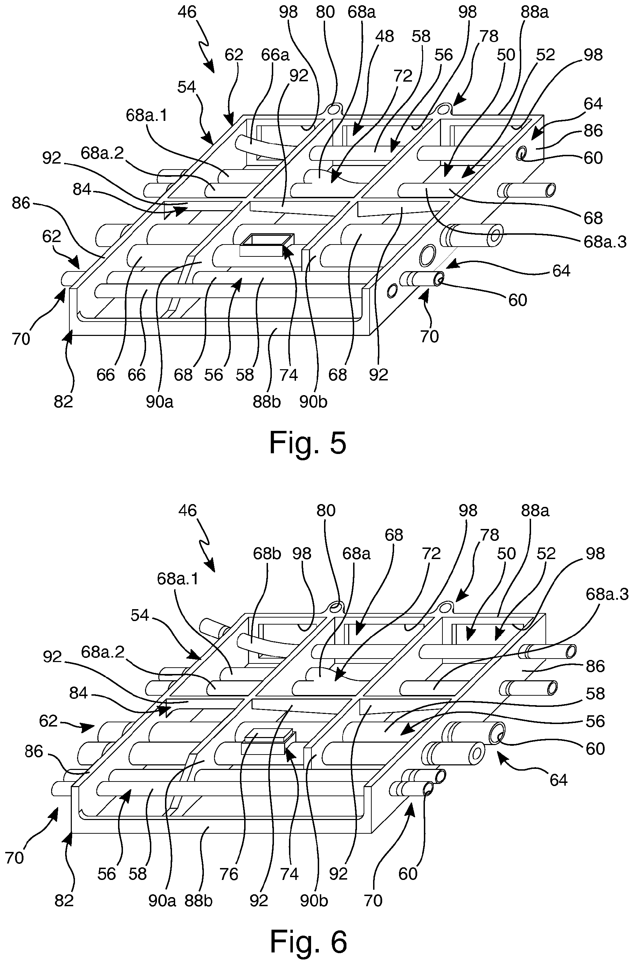

Bei den Ausführungsbeispielen der Kanalstruktur 46 gemäß den Figuren 5, 6, 7 und 8 sind jeweils funktionsgleiche Bauteile und Komponenten mit denselben Bezugszeichen versehen.

Die Führungsstruktur 48 stellt für eine Fluidleitung 34 eine bezogen auf das Roboterteil 32 bewegungsgesicherte Führung in dem Innenraum 26 bereit, so dass dort eine Eigenbewegung der Fluidleitung 34 relativ zu dem Roboterteil 32, d.h. vorliegend zu dem vorderen Armteil 20, weitgehend unterbunden ist.

Die Leitungsstruktur 50 stellt für ein Medium 38 in einer Fluidleitung 34 einen bezogen auf das Roboterteil 32 bewegungsgesicherten Strömungsweg in dem Innenraum 26 bereit. Dies wird dadurch bewirkt, dass die Leitungsstruktur 50 einen im Innenraum 26 angesiedelten Strömungsabschnitt 52 einer Fluidleitung 34 bereitstellt. Die Fluidleitung 34 ist dann durch einen Zuführabschnitt 34.1, der zu der Kanalstruktur 46 führt, den Strömungsabschnitt 52 und einen Abführabschnitt 34.2, der von der Kanalstruktur 46 wegführt, ausgebildet.

Wie die Figuren 5, 6, 7 und 8 zeigen, umfasst die Kanalstruktur 46 eine weitgehend starre Tragstrukur 54, welche mehrere Kanalleitungen 56 lagert, die jeweils einen von einem Umfangsmantel 58 begrenzten Durchgangskanal 60 definieren, der sich zwischen einem Eingangsende 62 und einem Ausgangsende 64 der jeweiligen Kanalleitung 56 erstreckt. Es sind nur einige Kanalleitungen 56 mit den weiteren Komponenten 58, 60, 62 und 64 mit Bezugszeichen versehen.

Eine solche Kanalleitung 56 kann einerseits als Führungs-Kanalleitung 66 der Führungsstruktur 48 für eine Fluidleitung 34 dienen, die durch den Durchgangskanal 60 der Führungs-Kanalleitung 66 hindurch geführt werden kann. In diesem Fall ist der Zuführabschnitt 34.1 einer Fluidleitung 34 durch den Teil gebildet, der bis zu der Kanalstruktur 46 führt. Der Strömungsabschnitt 52 ist durch den Teil dieser Fluidleitung 34 definiert, der sich durch die Führungs-Kanalleitung 66 erstreckt und der Abführabschnitt 34.2 der Fluidleitung 34 ist entsprechend deren Abführabschnitt 34.2.

Andererseits kann eine solche Kanalleitung 56 als Strömungs-Kanalleitung 68 der Leitungsstruktur 50 für ein Medium 38 dienen, welches durch den Durchgangskanal 60 der Strömungs-Kanalleitung 68 strömen kann. In diesem Fall sind das Eingangsende 62 und das Ausgangsende 64 der Kanalleitung 56, d.h. der Strömungs-Kanalleitung 68 als Anschlüsse 70 für Fluidleitungen 34 ausgebildet, so dass das Eingangsende 62 und das Ausgangsende 64 einer Strömungs-Kanalleitung 68 strömungstechnisch und fluiddicht mit einer Fluidleitung 34 lösbar gekoppelt werden kann. Eine Strömung-Kanalleitung 68 entspricht somit einer Kanalleitung 56 mit jeweils einem Anschluss 70 an beiden Enden. Die Anschlüsse 70 können insbesondere als eine Art Hydraulik-Kupplung ausgebildet sein, mit welcher fluidführende Leitungen in an und für sich bekannter Weise fluiddicht miteinander gekoppelt werden können, beispielsweise in Form von Steck- oder Schraubkupplungen. Die Zuführabschnitte 34.1 und die Abführabschnitte 34.2 der Fluidleitungen 34 weisen zu den Anschlüssen 70 komplementäre Anschlüsse auf, was nicht eigens gezeigt ist.

Bei dem Ausführungsbeispiel gemäß Figur 5 umfasst die Kanalstruktur 46 sowohl die Führungsstruktur 48 als auch die Leitungsstruktur 50, wobei die Anschlüsse 70 der vorhandenen Strömungs-Kanalleitungen 68 als freie Anschlussstutzen zu erkennen sind.

Bei einer nicht eigens gezeigten Abwandlung umfasst die Kanalstruktur 46 keine Strömungs-Kanalleitungen, sondern nur Führungs-Kanalleitungen 66.

Eine in Figur 5 mit 66a bezeichnete Führungs-Kanalleitung 66 weist einen gekrümmten Verlauf auf. Eine in Figur 5 mit 68a bezeichnete Strömungs-Kanalleitung 68 stellt eine Kanalgabelung 72 bereit, an welcher zwei Teilzweige 68a.1 und 68a.2 mit einem dritten Teilzweig 68a.3 der Führungs-Kanalleitung 68 zusammenlaufen. Abhängig von der Strömungsrichtung werden zwei Strömungen eines Mediums oder zweier Medien 38 an der Kanalgabelung 72 zu einer Strömung zusammengeführt oder eine Strömung eines Mediums 38 wird an der Gabelung 72 in zwei Strömungen aufgezweigt. Figur 5 veranschaulicht die erste Variante.

Abgesehen von unterschiedlichen Verläufen können verschiedene Kanalleitungen 56 in Verlaufrichtung auch voneinander abweichende Querschnitte und/oder Wandstärken haben. Der Querschnitt und die Wandstärke einer einzelnen Kanalleitung 56 können sich ebenfalls in Verlaufrichtung ändern.

Die Tragstruktur 54 umfasst eine oder mehrere Halteeinrichtung 74, mit denen sich Betriebseinheiten 36 oder auch andere Funktionseinheiten 76 des Roboters 16 an der Kanalstruktur 46 anbringen lassen. Die Figuren 5 und 6 veranschaulichen jeweils exemplarisch eine solche Halteeinrichtung 74, wobei Figur 6 zusätzlich eine Funktionseinheit 76 zeigt. Funktionseinheiten 76 können beispielsweise Temperatursensoren sein, mit welchen die Temperatur eines Mediums 38 überwacht wird. Auch eine Temperiereinrichtung kann vorgesehen sein, mit welcher das Medium 38 beim Durchströmen der Kanalstruktur 46 temperiert, d.h. erwärmt oder abgekühlt werden kann. Auch ein Drucksensor zum Überprüfen des Druckes eines Mediums 38 kann vorgesehen sein. Darüber hinaus können andere elektronische Bauteile wie Datenspeicher, Energiespeicher, Energieüberträger, Datensender oder - empfänger oder dergleichen bereitgestellt werden, sofern diese für den Betrieb des Roboters 16 erforderlich sind. Die Halteeinrichtungen 74 können offen oder auch als verschließbares Gehäuse ausgebildet sein.

Die Tragstruktur 54 weist außerdem eine Befestigungseinrichtung 78 auf, mit deren Hilfe die Kanalstruktur 46 im Innenraum 26 des Roboterarms 14 befestigt werden kann. Beispielhaft sind in den Figuren 5 bis 8 Befestigungsdurchgänge 80 gezeigt, die nicht alle ein Bezugszeichen tragen und durch welche entsprechende Schrauben geführt werden können.

Bei dem in Figur 6 gezeigten Ausführungsbeispiel umfasst die Kanalstruktur 46 keine Führungsstruktur, sondern nur die Leitungsstruktur 50 mit den Strömungs-Kanalleitungen 68, für die nur ein Bezugszeichen angegeben ist. Anstelle der gekrümmten Führungs-Kanalleitung 66a ist dort eine mit 68b bezeichnete gekrümmte Strömungs-Kanalleitung 68 vorhanden.

Wenn der Querschnitt der Anschlüsse 70 entsprechend dimensioniert ist, können die Strömungs-Kanalleitungen 68 allerding auch als Führungs-Kanalleitungen 66 genutzt werden, indem eine zu führende Fluidleitung 34 durch den Anschluss 70 am Eingangsende 62 in die Kanalleitung 56 hinein und durch den Anschluss 70 am Ausgangsende 64 wieder aus der Kanalleitung 56 hinaus geführt wird, ohne das die Anschlussfunktion der Anschlüsse 70 genutzt wird. Ob eine Führungsstruktur 48 und/oder eine Leitungsstruktur 50 vorhanden ist, ergibt sich aus der Art der Nutzung der Kanalstruktur 46. Dies gilt für alle Ausführungsbeispiele.

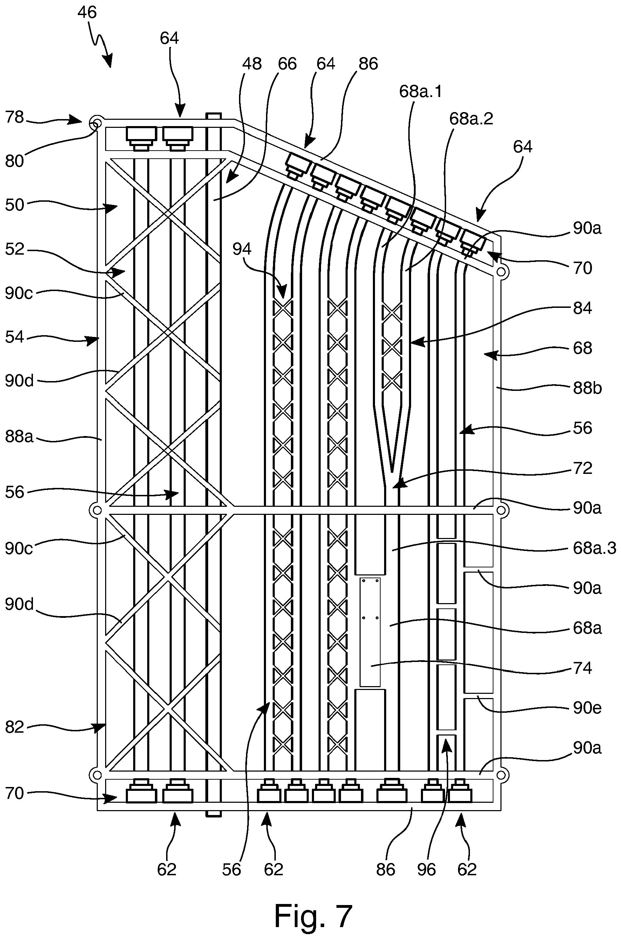

Bei dem Ausführungsbeispiel nach Figur 7 umfasst die Führungsstruktur 48 lediglich eine einzige Führungs-Kanalleitung 66. Bei der Leitungsstruktur 50 umfassen die Strömungs-Kanalleitungen 68, für die wieder nur ein Bezugszeichen vergeben ist, neben geradlinigen auch gekrümmte Strömungs-Kanalleitungen, von denen lediglich eine mit 68b bezeichnet, ist. Grundsätzlich sollen Richtungsänderungen und Verzweigungen der Kanalleitungen 56 einer archimedischen Spirale folgen, so dass keine Knicke und/oder keine kontinuierlichen Radien bei den Kanalleitungen 56 erzeugt werden.

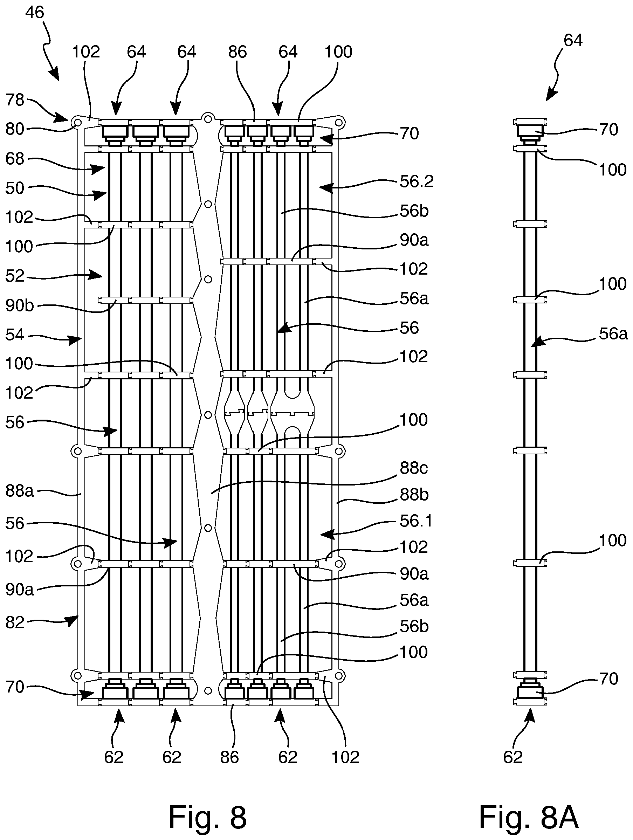

Die Anschlüsse 70 der vorhandenen Strömungs-Kanalleitungen 68 ragen anders als bei den Figuren 5 und 6 bei diesem Ausführungsbeispiel nicht über die Tragstruktur 54 nach außen hervor, sondern schließen mit dieser bündig ab. Dies ist auch bei dem Ausführungsbeispiel nach Figur 8 der Fall, bei dem die Kanalstruktur 46 im Übrigen keine Führungsstruktur 48 umfasst und die Leitungsstruktur 50 nur geradlinige Strömungs-Kanalleitungen 68 aufweist, die erneut mit nur einem Bezugszeichen gekennzeichnet sind.

Neben verschiedenen Varianten der Kanalstruktur 46 bezogen auf die Führungsstruktur 48 und die Leitungsstruktur 50 veranschaulichen die Figuren 5 bis 8 und 8A unterschiedliche Konzepte zur Ausbildung der Tragstruktur 54, welche nun erläutert werden. Wenn auf Unterschiede hingewiesen oder auf ein bestimmtes Ausführungsbeispiel Bezug genommen wird, gilt das jeweils für ein bestimmtes Ausführungsbeispiel Gesagte grundsätzlich für die Tragstruktur 54, d.h. Konstruktionsmerkmale, die anhand eines konkreten Ausführungsbeispiels erläutert werden, können ohne Weiteres auch bei einem anderen Ausführungsbeispiel als alternative oder ergänzende Konstruktionsmerkmale umgesetzt werden.

Die Tragstruktur 54 umfasst eine Rahmenkonstruktion 82 und gegebenenfalls Verstärkungselemente 84, die für die insgesamt erforderliche Stabilität, Steifheit und Verwindungsbeständigkeit der Kanalstruktur 46 insgesamt sorgen, wenn diese durch die Rahmenkonstruktion 82 als solche nicht ausreichend gewährleistet sind. Als Rahmenkonstruktion 82 ist nicht nur ein umlaufender Rahmen zu verstehen, sondern insgesamt derjenige Konstruktionsteil der Kanalstruktur 46, der tragend mit den Kanalleitungen 56 verbunden ist.

Die Rahmenkonstruktion 82 umfasst bei den vorliegenden Ausführungsbeispielen jeweils eine Querwange 86 an den Eingangsenden 62 und den Ausgangsenden 64 der Kanalleitungen 56, wobei die Querwangen 86 quer zu den Kanalleitungen 56 verlaufen. Wie Figur 7 am Ausgangsende 64 veranschaulicht, können die Querwangen 86 auch einen gewinkelten Verlauf haben. Der Verlauf der Querwangen 86 hängt von den räumlichen Gegebenheiten im Innenraum 26 ab und ist daran angepasst, kann also auch gekrümmt oder mehrfach gewinkelt oder gekrümmt sein.

Die Querwangen 86 sind unter Zuhilfenahme von Längsprofilen 88 miteinander verbunden, wobei die Längsprofile 88 an den Außenseiten der Kanalstruktur 46 mit 88a bzw. 88b bezeichnet sind. Zusätzlich zu den Querwangen 86 sind Querprofile 90 vorhanden, die zumindest an einer Stelle mit einem der Längsprofile 88 verbunden sind.

Die Figuren 5 und 6 zeigen zwei solche Querprofile 90a und 90b, wobei das Querprofil 90a an beiden Enden mit den dortigen Längsprofilen 88 und das Querprofil 90b nur an einem Ende mit einem Längsprofil 88 verbunden ist.

Figur 7 zeigt drei Querprofile 90a, die sich zwischen den beiden dortigen Längsprofilen 88a und 88b erstrecken. Hiervon sind zwei jeweils nahe der Querwangen 86 angeordnet und tragen zur Lagerung der Anschlüsse 70 der Kanalleitungen 56 bei. Außerdem sind dort mehrere Querprofile 90c und 90d mit einem Ende an dem Längsprofil 88a befestigt und davon ausgehend in verschiedene Richtungen schräg zur Längsrichtung. Dabei kreuzen sich jeweils ein Querprofil 90c und ein Querprofil 90d. Weitere Querprofile 90e erstrecken sich zwischen dem Längsprofil 88b und einer benachbarten Kanalleitung 56.

In Figur 8 ist zwischen den Längsprofilen 88a, 88b ein drittes Längsprofil 88c zuerkennen. Querprofile 90a erstrecken sich von dem Längsprofil 88a zum Längsprofil 88c oder vom Längsprofil 88b zum Längsprofil 88c. Es gibt ein Querprofil 90b, das nur an einem Ende mit einem Längsprofil 88 verbunden sind, in diesem Fall mit dem mittleren Längsprofil 88c. Die Querprofile 90 im in Figur 8 oberen Bereich der dortigen Kanalstruktur 46 sind in Längsrichtung versetzt angeordnet.

Die Verstärkungselemente 84 sind bei den Kanalstrukturen 46 nach den Figuren 5 und 6 als Längsrippen 92 ausgebildet, die sich zwischen den Querwangen 86 und Querprofilen 90 erstrecken.

Bei der Kanalstruktur 46 nach Figur 7 sind Verstärkungselemente 84 als Kreuzstreben 94 oder Querstreben 96 ausgebildet, welche sich jeweils zwischen zwei benachbarten Kanalleitungen 56 erstrecken.

Die Kanalstruktur 46 gemäß Figur 8 umfasst keine gesonderten Verstärkungselemente; die Stabilität der Kanalstruktur 46 ist dort durch die Rahmenkonstruktion 82 sichergestellt.

Die Kanalstruktur 46 ist so materialsparend wie möglich ausgebildet. Aus diesem Grund können die Bauteile der Rahmenkonstruktion 82 und die Verstärkungselemente 84 Materialausnehmungen bzw. materialfreie Bereiche 94 umfassen, was in den Figuren 5 und 6 bei dem jeweiligen Längsprofil 88a veranschaulicht ist. Die Tragstruktur 54 kann auf diese Weise insgesamt als Gitterstruktur ausgebildet sein. Die Kanalstruktur 46 kann mit Hilfe eines additiven Fertigungsverfahrens hergestellt werden, bei welchem die Kanalstruktur 46 oder zumindest Teile davon durch Ablagern von Material schichtweise aufgebaut wird. Als Materialien hierfür kommen in bekannter Weise Metalle, Kunststoffe oder Verbundmaterialien in Frage. Verschiedene Komponenten und Bauteile der Kanalstruktur 46 können im Übrigen - unabhängig von der Art der Herstellung und nicht nur bei additiven Herstellungsverfahren - aus unterschiedlichen Materialien sein. Die Materialien können beispielsweise unter Berücksichtigung von gewünschten Eigenschaften eines Bauteils oder einer Komponente ausgewählt sein, zum Beispiel Eigenschaften wie die Farbe, die Festigkeit, die elektrische Leitfähigkeit, die chemische Beständigkeit, das Temperaturverhalten und dergleichen.

Dabei kann auch vorgesehen sein, dass eine oder mehrere oben angesprochene Funktionseinheiten 76 nicht als jeweils gesondertes Bauteil angebracht werden, sondern bei dem additiven Fertigungsvorgang als additiver Teilvorgang hergestellt und dabei in die Kanalstruktur 46 integriert werden.

Gewinde und Kupplungskomponenten der Anschlüsse 70 können dabei ebenfalls additiv gefertigt werden, so dass auch mit Blick auf die Anschlüsse 70 auf gesonderte Bauteile verzichtet werden kann.

Additive Fertigungsverfahren erlauben auch den Aufbau mehrschichtiger Materialverbünde. So kann eine Kanalleitung 56 beispielsweise einen inneren, gut wärmeleitenden Mantel aufweisen, der von eine thermisch isolierenden Außenmantel umgeben ist.

Bei den Ausführungsbeispielen gemäß den Figuren 5, 6 und 7 ist zumindest die Tragstruktur 54 einstückiges integratives Bauteil konzipiert. Dies ist so zu verstehen, dass es keine Bauteile gibt, die durch gesonderte Befestigungsmittel lösbar miteinander verbunden sind. Wenn die Kanalstruktur 46 durch ein additives Fertigungsverfahren hergestellt wird, kann die Kanalstruktur 46 einstückig integrativ sein und gegebenenfalls sogar Funktionseinheiten 76 integrativ umfassen.

Das in Figur 8 gezeigte Ausführungsbeispiel folgt einen anderen Konzept; dort ist die Tragstruktur 54 bzw. die Kanalstruktur 46 aus mehreren Bauteilen modular aufgebaut, aus denen sich beim Zusammenbau die Führungsstruktur 48 und die Leitungsstruktur 50 mit den Kanalleitungen 56 ausbildet.

Figur 8A veranschaulicht eine Kanalleitung 56a, welche in Figur 8 ebenso bezeichnet ist und mehrere Verbindungsglieder 100 trägt, welche bei der ausgebildeten Kanalstruktur 46 die Querwangen 86 und Querprofile 90 ausbilden.

Figur 8 zeigt außerdem, dass die äußeren Längsprofile 88a und 88b sowie das mittlere Längsprofil 88c ebenfalls als gesonderte Bauteile gefertigt sind und Verbindungselemente 102 aufweisen, die zu den Verbindungsgliedern 100 komplementär sind.

Darüber hinaus sind in Figur 8 auch diejenigen Kanalleitungen 56 als solche modular ausgebildet, die zwischen dem mittleren Längsprofil 90c und dem äußeren Längsprofil 90b angeordnet sind; es gibt dort beispielhaft jeweils zwei koppelbare Kanalabschnitte 56.1 und 56.2, die jeweils ein Leitungsmodul 104 definieren. Dabei gibt es zwei mit 56b und 56c bezeichnete Kanalleitungen, die als Doppelstrang-Modul ausgebildet sind.

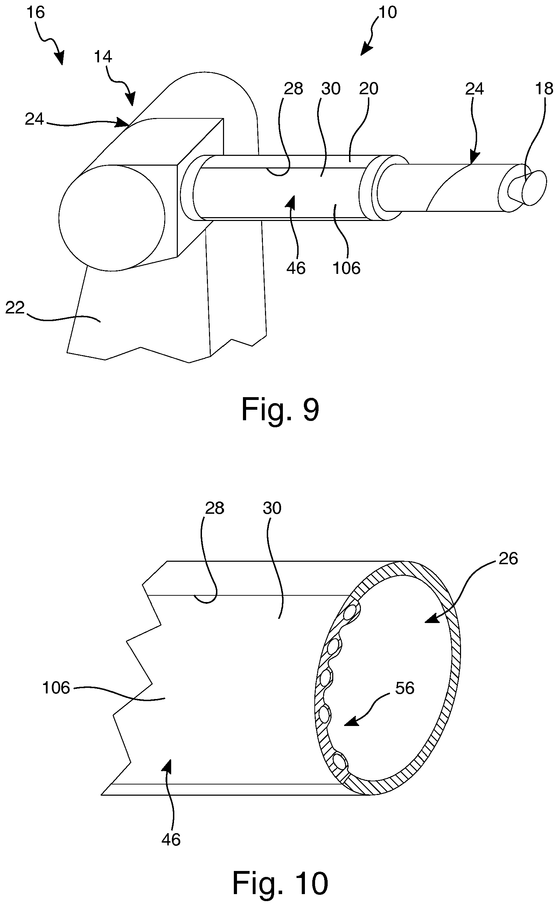

Die Figuren 9 und 10 veranschaulichen eine Abwandlung, bei welcher die Abdeckung 30 des Innenraums 26 die Kanalstruktur 46 bereitstellt. Figur 10 zeigt, dass auf der in den Innenraum 26 weisenden Seite dieser Abdeckung 30 entsprechende Kanalleitungen 56 vorhanden sind. Damit die Kanalstruktur 46 zugleich die Abdeckung 30 ausbilden kann, definiert die Kanalstruktur 46 auf der vom Innenraum 26 wegweisenden Seite eine geschlossene Fläche 106. Ansonsten gilt das oben zu den Ausführungsbeispielen gemäß den Figuren 5 bis 8 Gesagte sinngemäß entsprechend.

## Patentansprüche

1. Kanalstruktur zur Verwendung in einem Roboter (16) zur Beschichtung von Gegenständen, welcher ein Roboterteil (32) mit einem Betriebsraum (26) aufweist, durch welchen Fluidleitungen (34) geführt sind, mit denen verschiedene Medien (38) zu einer von dem Roboter (16) getragenen Applikationseinrichtung (18) geführt werden, wobei
a) die Kanalstruktur (46) als gesondertes Bauteil ausgebildet ist; **dadurch gekennzeichnet, dass** die Kanalstruktur
b) eine Führungsstruktur (48) für mehrere Fluidleitungen (34) umfasst, die für jede Fluidleitung (34) jeweils eine Kanalleitung (56) mit einem Eingangsende (62) und einem Ausgangsende (64) umfasst, welche einen Durchgangskanal (60) definiert und als Führungs-Kanalleitung (66) dient, derart, dass die Fluidleitung (34) durch den Durchgangskanal (60) hindurchführbar ist;
und/oder
c) eine Leitungsstruktur (50) für in ein oder mehreren Fluidleitungen (34) geführte Medien (38) umfasst.

2. Kanalstruktur nach Anspruch 1, **dadurch gekennzeichnet, dass** die Leitungsstruktur (50) vorhanden ist und wenigstens eine Kanalleitung (56) mit einem Eingangsende (62) und einem Ausgangsende (64) umfasst, welche einen Durchgangskanal (60) definiert und als Strömungs-Kanalleitung (68) der Leitungsstruktur (50) dient, derart, dass ein Medium (38) durch den Durchgangskanal (60) strömen kann.

3. Kanalstruktur nach Anspruch 2, **dadurch gekennzeichnet, dass** das Eingangsende (62) und das Ausgangsende (64) der Strömungs-Kanalleitung (68) jeweils als Anschluss (70) für einen Fluidleitungs-Zuführabschnitt (34.1) und einen Fluidleitungs-Abführabschnitt (34.2) einer Fluidleitung (34.1, 52, 34.2) ausgebildet ist.

4. Kanalstruktur nach Anspruch 2 oder 3, **dadurch gekennzeichnet, dass** eine oder mehrere Kanalleitungen (56) der Führungsstruktur (48) und/oder der Leitungsstruktur (50) einen gekrümmten Verlauf haben und/oder eine Kanalgabelung (72) aufweisen und/oder in Verlaufsrichtung einen sich ändernden Querschnitt und/oder eine sich ändernde Wandstärke haben und/oder dass mehrere Kanalleitungen (56) der Führungsstruktur (48) und/oder der Leitungsstruktur (50) in Verlaufrichtung voneinander abweichende Querschnitte und/oder Wandstärken haben.

5. Kanalstruktur nach einem der Ansprüche 1 bis 4, **dadurch gekennzeichnet, dass** wenigstens eine Halteeinrichtung (74) für eine Betriebseinheit (36), insbesondere für eine Dosiereinheit (42) oder für eine Medienwechseleinheit, und/oder für eine Funktionseinheit (76) vorgesehen ist, insbesondere für einen Temperatursensor zur Überwachung der Temperatur eines Mediums (38), für eine Temperiereinrichtung zum Temperieren eines Mediums (38), für einen Drucksensor zum Überprüfen des Druckes eines Mediums (38), für einen Datenspeicher, für einen Energiespeicher, für einen Energieüberträger, für einen Datensender oder einen Datenempfänger.

6. Kanalstruktur nach einem der Ansprüche 2 bis 4 oder nach Anspruch 5 unter Rückbezug auf Anspruch 2, **dadurch gekennzeichnet, dass** eine Tragstruktur (54) mit einer Rahmenkonstruktion (82) vorgesehen ist, welche tragend mit den Kanalleitungen (56) verbunden ist.

7. Kanalstruktur nach Anspruch 6, **dadurch gekennzeichnet, dass** die Rahmenkonstruktion (82) eine Querwange (86) an dem Eingangsende (62) und/oder eine Querwange (86) an dem Ausgangsende (64) der vorhandenen Kanalleitungen (56) umfasst, welche quer zu diesen Kanalleitungen (56) verläuft.

8. Kanalstruktur nach Anspruch 7, **dadurch gekennzeichnet, dass** jeweils eine Querwange (86) am Eingangsende (62) und am Ausgangsende (64) mittels Längsprofilen (88a, 88b, 88c)) miteinander verbunden sind.

9. Kanalstruktur nach Anspruch 8, **dadurch gekennzeichnet, dass** wenigstens ein Querprofil (90) vorhanden ist, welches zumindest an einem Ende mit einem Längsprofil (88a, 88b, 88c) verbunden ist.

10. Kanalstruktur nach einem der Ansprüche 6 bis 9, **dadurch gekennzeichnet, dass** die Tragstruktur (54) ein oder mehrere Verstärkungselemente (84) umfasst.

11. Kanalstruktur nach Anspruch 10, **dadurch gekennzeichnet, dass** die Verstärkungselemente (84) als Längsrippen (92) und/oder Kreuzstreben (94) und/oder Querstreben (96) ausgebildet sind.

12. Kanalstruktur nach einem der Ansprüche 6 bis 11, **dadurch gekennzeichnet, dass** die Rahmenkonstruktion (82) und/oder, unter Rückbezug auf Anspruch 10, Verstärkungselemente (84) Materialausnehmungen bzw. materialfreie Bereiche (94) umfassen.

13. Kanalstruktur nach einem der Ansprüche 1 bis 12, **dadurch gekennzeichnet, dass** die Kanalstruktur (46) zumindest teilweise durch ein additives Fertigungsverfahren aus Metall, Kunststoff und/oder Verbundmaterialen hergestellt ist.

14. Kanalstruktur nach Anspruch 13 unter Rückbezug auf Anspruch 5, **dadurch gekennzeichnet, dass** eine oder mehrere Funktionseinheiten (76) bei dem additiven Fertigungsverfahren als additiver Teilvorgang hergestellt und dabei in die Kanalstruktur (46) integriert sind.

15. Kanalstruktur nach einem der Ansprüche 1 bis 14, **dadurch gekennzeichnet, dass** die Tragstruktur (54) oder die Kanalstruktur (46) ein einstückiges integratives Bauteil ist.

16. Roboter zur Beschichtung von Gegenständen, welcher ein Roboterteil (32) mit einem Betriebsraum (26) aufweist, durch welchen Fluidleitungen (34) geführt sind, mit denen verschiedene Medien (38) zu einer von dem Roboter (16) getragenen Applikationseinrichtung (18) geführt werden, **dadurch gekennzeichnet, dass** eine Kanalstruktur nach einem der Ansprüche 1 bis 15 vorgesehen ist.

17. Roboter nach Anspruch 16, **dadurch gekennzeichnet, dass** das Roboterteil (32) ein Armteil (20) eines Roboterarmes (14) ist.

18. Roboter nach Anspruch 17, **dadurch gekennzeichnet, dass** das Armteil (20) mit einem Handstück (12) des Roboterarmes (14) verbunden ist, das die Applikationseinrichtung (18) trägt.

19. Roboter nach einem der Ansprüche 16 bis 18, **dadurch gekennzeichnet, dass** der Betriebsraum (26) ein Innenraum (26) ist, der durch eine Abdeckung (30) verschließbar ist.

20. Roboter nach Anspruch 19, **dadurch gekennzeichnet, dass** die Abdeckung (30) durch die Kanalstruktur (46) ausgebildet ist.

## Claims

1. Channel structure for use in a robot (16) for coating articles which has a robot part (32) with an operating space (26) through which fluid lines (34) are guided which are used to guide various media (38) to an application device (18) carried by the robot (16),
wherein
a) the channel structure (46) is configured as a separate component;
**characterized in that** the channel structure
b) comprises a guide structure (48) for a plurality of fluid lines (34) which comprises, for each fluid line (34), a respective channel line (56) with an inlet end (62) and an outlet end (64), said channel line defining a passage channel (60) and serving as guide channel line (66), in such a way that the fluid line (34) can be guided through the passage channel (60);
and/or
c) comprises a line structure (50) for media (38) guided in one or more fluid lines (34).

2. Channel structure according to Claim 1, **characterized in that** the line structure (50) is present and comprises at least one channel line (56) with an inlet end (62) and an outlet end (64), said channel line defining a passage channel (60) and serving as flow channel line (68) of the line structure (50), in such a way that a medium (38) can flow through the passage channel (60).

3. Channel structure according to Claim 2, **characterized in that** the inlet end (62) and the outlet end (64) of the flow channel line (68) are each configured as a connection (70) for a fluid line feed portion (34.1) and a fluid line discharge portion (34.2) of a fluid line (34.1, 52, 34.2).

4. Channel structure according to Claim 2 or 3, **characterized in that** one or more channel lines (56) of the guide structure (48) and/or of the line structure (50) have a curved profile and/or have a channel bifurcation (72) and/or have, in a profile direction, a changing cross section and/or a changing wall thickness, and/or **in that** a plurality of channel lines (56) of the guide structure (48) and/or of the line structure (50) have cross sections and/or wall thicknesses which deviate from one another in the profile direction.

5. Channel structure according to one of Claims 1 to 4, **characterized in that** at least one holding device (74) for an operating unit (36), in particular for a metering unit (42) or for a media changeover unit, and/or for a functional unit (76), in particular for a temperature sensor for monitoring the temperature of a medium (38), for a temperature-control device for controlling the temperature of a medium (38), for a pressure sensor for checking the pressure of a medium (38), for a data store, for an energy store, for an energy transmitter, for a data transmitter or a data receiver, is provided.

6. Channel structure according to one of Claims 2 to 4 or according to Claim 5 with reference back to Claim 2, **characterized in that** a load-bearing structure (54) with a frame construction (82) is provided and is connected to the channel lines (56) in a load-bearing manner.

7. Channel structure according to Claim 6, **characterized in that** the frame construction (82) comprises a transverse web (86) at the inlet end (62) and/or a transverse web (86) at the outlet end (64) of the channel lines (56) present, said transverse web running transverse to these channel lines (56).

8. Channel structure according to Claim 7, **characterized in that** a respective transverse web (86) at the inlet end (62) and at the outlet end (64) are connected to one another by means of longitudinal profiles (88a, 88b, 88c).

9. Channel structure according to Claim 8, **characterized in that** at least one transverse profile (90) is present which is connected at least at one end to a longitudinal profile (88a, 88b, 88c) .

10. Channel structure according to one of Claims 6 to 9, **characterized in that** the load-bearing structure (54) comprises one or more reinforcing elements (84) .

11. Channel structure according to Claim 10, **characterized in that** the reinforcing elements (84) are configured as longitudinal ribs (92) and/or cross struts (94) and/or transverse struts (96).

12. Channel structure according to one of Claims 6 to 11, **characterized in that** the frame construction (82) and/or, with reference back to Claim 10, reinforcing elements (84) comprise material cutouts or material-free regions (94).

13. Channel structure according to one of Claims 1 to 12, **characterized in that** the channel structure (46) is at least partially produced by an additive manufacturing method from metal, plastic and/or composite materials.

14. Channel structure according to Claim 13 with reference back to Claim 5, **characterized in that**, during the additive manufacturing method, one or more functional units (76) are produced as an additive partial process and in so doing are integrated into the channel structure (46).

15. Channel structure according to one of Claims 1 to 14, **characterized in that** the load-bearing structure (54) or the channel structure (46) is a one-piece integrative component.

16. Robot for coating articles which has a robot part (32) with an operating space (26) through which fluid lines (34) are guided which are used to guide various media (38) to an application device (18) carried by the robot (16), **characterized in that** a channel structure according to one of Claims 1 to 15 is provided.

17. Robot according to Claim 16, **characterized in that** the robot part (32) is an arm part (20) of a robot arm (14).

18. Robot according to Claim 17, **characterized in that** the arm part (20) is connected to a hand piece (12) of the robot arm (14), said hand piece carrying the application device (18).

19. Robot according to one of Claims 16 to 18, **characterized in that** the operating space (26) is an interior space (26) which can be closed by a cover (30).

20. Robot according to Claim 19, **characterized in that** the cover (30) is formed by the channel structure (46) .

## Revendications

1. Structure de canal pour utilisation dans un robot (16) pour le revêtement d'objets, qui présente une partie de robot (32) avec un espace d'exploitation (26) à travers lequel sont guidées des conduites de fluide (34) avec lesquelles différents milieux (38) sont guidés vers un dispositif d'application (18) porté par le robot (16),
a) la structure de canal (46) étant réalisée sous forme de composant séparé ;
**caractérisée en ce que** la structure de canal
b) comprend une structure de guidage (48) pour plusieurs conduites de fluide (34), qui comprend pour chaque conduite de fluide (34) respectivement une conduite de canal (56) avec une extrémité d'entrée (62) et une extrémité de sortie (64), qui définit un canal de passage (60) et sert de conduite de canal de guidage (66), de telle sorte que la conduite de fluide (34) peut être passée à travers le canal de passage (60) ;
et/ou
c) comprend une structure de conduite (50) pour des milieux (38) guidés dans une ou plusieurs conduites de fluide (34) .

2. Structure de canal selon la revendication 1, **caractérisée en ce que** la structure de conduite (50) est présente et comprend au moins un conduite de canal (56) avec une extrémité d'entrée (62) et une extrémité de sortie (64), qui définit un canal de passage (60) et sert de conduite de canal d'écoulement (68) de la structure de conduite (50), de telle sorte qu'un milieu (38) peut s'écouler à travers le canal de passage (60).

3. Structure de canal selon la revendication 2, **caractérisée en ce que** l'extrémité d'entrée (62) et l'extrémité de sortie (64) de la conduite de canal d'écoulement (68) sont réalisées respectivement en tant que raccord (70) pour une section d'amenée de conduite de fluide (34.1) et une section d'évacuation de conduite de fluide (34.2) d'une conduite de fluide (34.1, 52, 34.2) .

4. Structure de canal selon la revendication 2 ou 3, **caractérisée en ce qu'**une ou plusieurs conduites de canal (56) de la structure de guidage (48) et/ou de la structure de conduite (50) ont un tracé incurvé et/ou présentent une bifurcation de canal (72) et/ou ont une section transversale qui varie et/ou une épaisseur de paroi qui varie dans la direction du tracé et/ou **en ce que** plusieurs conduites de canal (56) de la structure de guidage (48) et/ou de la structure de conduite (50) ont des sections transversales et/ou des épaisseurs de paroi qui diffèrent les unes des autres dans la direction du tracé.

5. Structure de canal selon l'une quelconque des revendications 1 à 4, **caractérisée en ce qu'**au moins un dispositif de retenue (74) est prévu pour une unité d'exploitation (36), notamment pour une unité de dosage (42) ou pour une unité de changement de milieu, et/ou pour une unité fonctionnelle (76), notamment pour un capteur de température pour surveiller la température d'un milieu (38), pour un dispositif de régulation de température pour réguler la température d'un milieu (38), pour un capteur de pression pour vérifier la pression d'un milieu (38), pour une mémoire de données, pour un accumulateur d'énergie, pour un transmetteur d'énergie, pour un émetteur de données ou pour un récepteur de données.

6. Structure de canal selon l'une quelconque des revendications 2 à 4 ou selon la revendication 5 en référence à la revendication 2, **caractérisée en ce qu'**une structure de support (54) avec une construction de cadre (82) est prévue, qui est reliée de manière portante aux conduites de canal (56).

7. Structure de canal selon la revendication 6, **caractérisée en ce que** la construction de cadre (82) comprend une joue transversale (86) à l'extrémité d'entrée (62) et/ou une joue transversale (86) à l'extrémité de sortie (64) des conduites de canal présentes (56), qui s'étendent transversalement par rapport à ces conduites de canal (56).

8. Structure de canal selon la revendication 7, **caractérisée en ce qu'**une joue transversale (86) à l'extrémité d'entrée (62) et à l'extrémité de sortie (64) sont respectivement reliées entre elles au moyen de profilés longitudinaux (88a, 88b, 88c).

9. Structure de canal selon la revendication 8, **caractérisée en ce qu'**au moins un profilé transversal (90) est présent, qui est relié au moins à une extrémité à un profilé longitudinal (88a, 88b, 88c).

10. Structure de canal selon l'une quelconque des revendications 6 à 9, **caractérisée en ce que** la structure de support (54) comprend un ou plusieurs éléments de renfort (84).

11. Structure de canal selon la revendication 10, **caractérisée en ce que** les éléments de renfort (84) sont réalisés sous forme de nervures longitudinales (92) et/ou d'entretoises croisées (94) et/ou d'entretoises transversales (96).

12. Structure de canal selon l'une quelconque des revendications 6 à 11, **caractérisée en ce que** la construction de cadre (82) et/ou, en référence à la revendication 10, les éléments de renfort (84) comprennent des évidements de matériau ou des zones sans matériau (94).

13. Structure de canal selon l'une quelconque des revendications 1 à 12, **caractérisée en ce que** la structure de canal (46) est fabriquée au moins en partie par un procédé de fabrication additive à partir de métal, de matière plastique et/ou de matériaux composites.

14. Structure de canal selon la revendication 13, en référence à la revendication 5, **caractérisée en ce qu'**une ou plusieurs unités fonctionnelles (76) sont fabriquées lors du procédé de fabrication additive en tant que processus partiel additif et sont ainsi intégrées dans la structure de canal (46).

15. Structure de canal selon l'une quelconque des revendications 1 à 14, **caractérisée en ce que** la structure de support (54) ou la structure de canal (46) est un composant intégré en une seule pièce.

16. Robot pour le revêtement d'objets, qui présente une partie de robot (32) avec un espace d'exploitation (26), à travers lequel sont guidées des conduites de fluide (34), avec lesquelles différents milieux (38) sont guidés vers un dispositif d'application (18) porté par le robot (16), **caractérisé en ce qu'**une structure de canal selon l'une quelconque des revendications 1 à 15 est prévue.

17. Robot selon la revendication 16, **caractérisé en ce que** la partie de robot (32) est une partie de bras (20) d'un bras de robot (14).

18. Robot selon la revendication 17, **caractérisé en ce que** la partie de bras (20) est reliée à une pièce à main (12) du bras de robot (14) qui porte le dispositif d'application (18).

19. Robot selon l'une quelconque des revendications 16 à 18, **caractérisé en ce que** l'espace d'exploitation (26) est un espace intérieur (26) qui peut être fermé par un couvercle (30).

20. Robot selon la revendication 19, **caractérisé en ce que** le couvercle (30) est réalisé par la structure de canal (46).
